# EUROPÄISCHE PATENTSCHRIFT

(11) **EP 0 381 009 B1**
(45) Veröffentlichungstag und Bekanntmachung des Hinweises auf die Patenterteilung: **14.04.1993**
(21) Anmeldenummer: 90101265.8
(22) Anmeldetag: 23.01.1990
(51) Int. Cl.: B23Q 11/12, H02K 9/04, B23Q 5/10

(54) **Antrieb für die Werkstückspindel einer Werkzeugmaschine**
Drive for the workpiece spindle of a machine-tool
Motorisation de la broche d'une machine-outil

(30) Priorität: 28.01.1989 DE 3902592
(43) Veröffentlichungstag der Anmeldung: 08.08.1990
(73) Patentinhaber: Gildemeister AG, D-33689 Bielefeld (DE)
(72) Erfinder: Schalles, Erhard, D-4800 Bielefeld 18 (DE)

(56) Entgegenhaltungen:
- EP-A- 0 094 680
- DE-A- 2 659 650
- DE-A- 2 758 879
- DE-A- 3 534 395
- DE-C- 2 724 440

## Beschreibung

Die Erfindung betrifft den Antrieb für die Werkstückspindel einer Werkzeugmaschine mit einem auf dem freien Ende der Werkstückspindel angeordneten Antriebsmotor, wobei der Rotor des Antriebsmotors auf der Werkstückspindel befestigt und der Stator in einem Motorgehäuse angeordnet ist, das mit dem Spindelkasten der Werkstückspindel verbunden ist.

Ein derartiger Antrieb ist aus dem Buch "Ultraprecision in Manufacturing Engineering", Springer Verlag, 1988, Seiten 206 und 207 bekannt. Die gezeigte Werkstückspindel ist aerostatisch in einem Spindelkasten gelagert. Auf dem vom Werkstückspannfutter abgewandten Ende der Werkstückspindel, auf dem üblicherweise die Riemenscheibe des Spindelantriebs vorgesehen ist, ist ein Elektromotor angeordnet, wobei der Rotor direkt auf der Werkstückspindel befestigt ist.

In DE-PS 27 24 440 ist ein Antrieb vorgeschlagen, der zwischen den Werkstückspindellagern auf der Werkstückspindel innerhalb des Spindelkastens befestigt ist. In der hohlen Werkstückspindel ist eine Ringkammer geschaffen, die mit einem wärmeleitenden Medium gefüllt ist. Dadurch soll die vom Antriebsmotor erzeugte Wärme zu einem Werkstückspindelbereich transportiert werden, der von einer Luftströmungskammer umgeben ist. Obwohl damit ein Wärmestau vermieden werden kann, bedarf es doch einer erheblichen Temperaturdifferenz zur Abfuhr der erzeugten Wärme, so daß Wärmedehnungen der Werkstückspindel die Genauigkeit der Bearbeitung in der Werkzeugmaschine gespannter Werkstücke erheblich verringert.

Ein Antrieb der ebenfalls zwischen den Lagerstellen der Werkstückspindel angeordnet ist, sieht deshalb gemäß der EP-B 94 680 vor, daß erstens der Stator von einem Luftstrom gekühlt wird und zweitens das vordere Festlager von Wärmeübertragungen geschützt wird, dadurch daß zwischen Festlager und Antriebsmotor ein von Kühlmittel durchstömter Ringraum vorgesehen wird. Auch diese verbesserte Maßnahme löst das Problem der Wärmebeeinflussung nicht befriedigend, da sich die Werkstückspindel im Bereich des Motors ungehindert erwärmen kann und damit auch die gesamte Werkstückspindel, weil der Wärmetransport in Metallen sehr gut ist.

Die beiden letztgenannten Antriebe sind wegen dieser Schwierigkeiten, aber auch wegen des geringen Raumes zwischen den Lagern nur für kleine Leistungen geeignet, während sich außerhalb der Spindellager am Werkstückspindelende Motoren größerer Leistung und damit größerer Abmessungen unterbringen lassen.

Der Erfindung liegt die Aufgabe zugrunde, bei einer Werkstückspindel mit einem auf ihrem freien Ende angeordneten Antriebsmotor, die Beeinträchtigungen durch die im Motor entstehenden Erwärmungen möglichst klein zu halten. Insbesondere soll eine Einleitung der Motorwärme in die Werkstückspindel vermieden werden.

Die Aufgabe wird durch die Merkmale des Hauptanspruchs gelöst.

Dadurch daß das Kühlmittel den Antriebsmotor nahezu allseitig umströmt, wird die Übertragung von Wärme in eines der angrenzenden Bauteile vermieden. Dem Motor wird außerdem dadurch soviel Wärme entzogen, daß die Temperaturerhöhung durch die Eigenwärmeerzeugung gering ist.

Da die Arbeitsgenauigkeit der Werkzeugmaschine unmittelbar betroffen ist, wenn sich die Werkstückspindel erwärmt und infolgedessen ausdehnt, ist besondere Sorgfalt auf die Trennung der Werkstückspindel vom Motor gelegt. Die zur Momentenübertragung erforderlichen Bereiche, z. B. in Form von Stegen, werden vom Kühlmittel umspült, so daß nur geringe Restwärme die Spindel erreicht. Die Oberflächenbereiche der Werkstückspindel unterhalb der Kühlmittelkanäle werden durch das Kühlmedium vollständig vom Motorraum isoliert.

Die Montage eines derartigen Antriebs und seine Einstellung wird erleichtert, wenn der Rotor mit einstellbaren Spannelementen auf der Werkstückspindel befestigt wird und das den Stator beinhaltende Gehäuse mit dem Spindelkasten verschraubt wird. Die Spannelemente und der Gehäuseflansch können dann die Kühlkanäle in einfacher Weise aufnehmen.

Vorteilhafter Weise kann die Kühlung in einem äußeren Kühlkreislauf mit normaler Umgebungsluft geschehen, während der innere Kühlmittelkreislauf mit gefilterter Luft vorgenommen werden muß, um Funktionsstörungen des Motors zu vermeiden.

Die Erfindung wird an Hand der nachfolgendne Zeichnungen näher beschrieben. Es zeigen:

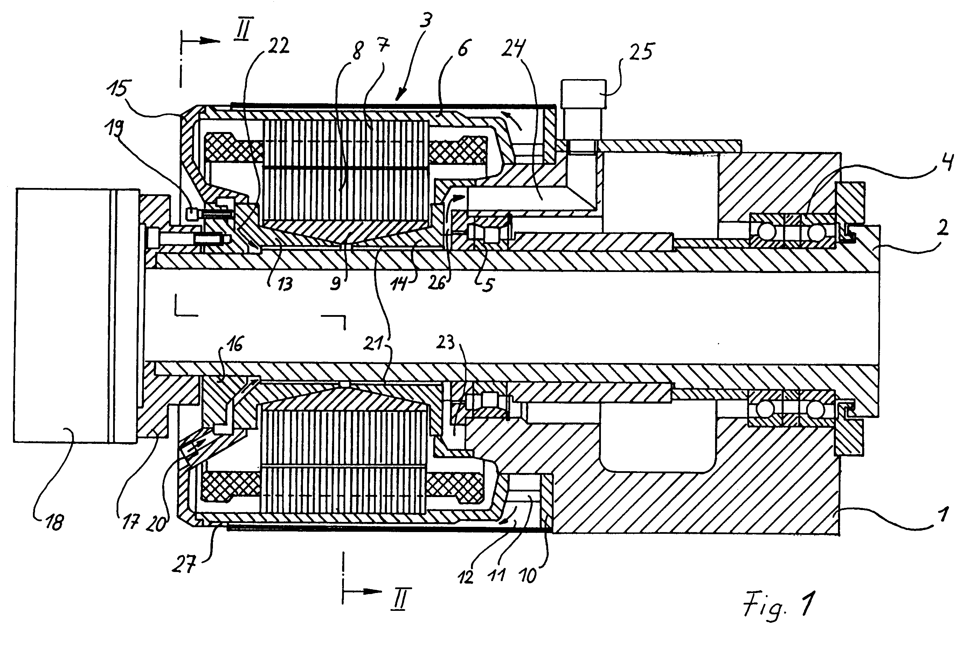

Fig.1 einen Längsschnitt durch den Spindelkasten;
Fig.2 eine Seitenansicht teilweise im Schnitt.

In einem Spindelkasten 1 ist eine Werkstückspindel 2 drehbar gelagert. Der Antriebsmotor 3 ist am Spindelende vorgesehen, wo üblicherweise die Riementriebe angeordnet sind. Damit ist eine Trennung von Spindelkasten 1 und Motorraum konstruktiv gegeben. Die Werkstückspindellagerung mit dem vorderen Festlager 4 und dem hinteren Loslager 5 kann in üblicher Weise unabhängig vom Antrieb ausgeführt werden. Als Antriebsmotor 3 wird ein Bausatzmotor verwendet, der aus einem Motorgehäuse 6 und dem eingebauten Stator 7 einerseits und dem auf dem Rotorträger 9 vormontierten Rotor 8 andererseits besteht. Das Motorgehäuse 6 ist mit einem Motorflansch 10 am Spindelkasten 1 befestigt. Motorflansch 10 und Motorgehäuse 6 sind über Stege 11 miteinander so verbunden, daß sich zwischen ihnen ein Ringkanal 12 ergibt.

Der Rotorträger 9 wird mittels Spannhülsen 13,14 auf dem freien Werkstückspindelende gespannt. Der Motorraum wird durch den Deckel 15 verschlossen. Hinter den Rotorträger 9 wird ein Druckflansch 16 und der Spannerflansch 17 unverschieblich auf der Werkstückspindel 2 befestigt. Der Spannerflansch 17 trägt den Spannzylinder 18 für die nicht dargestellte Werkstückspanneinrichtung. Der Druckflansch 16 enthält über seinen Umfang verteilt Druckschrauben 19. Über die Druckschrauben 19 können die Spannhülsen 13,14 vorgespannt werden. Die Spannhülsen 13,14 stützen sich dabei am Innenring des Loslagers 5 ab, zentrieren den Rotor 9 und geben eine spielfreie, reibschlüssige Verbindung zur Werkstückspindel 2. Im Deckel 15 ist eine Anschlußbohrung 20 für die Einleitung des Kühlmittels. Die Anschlußbohrung 20 mündet in einen Ringspalt 22 zwischen Druckflansch 16 und Spannhülse 13. Von hier aus kann das Kühlmittel in die Kühlmittelkanäle 21 des rotierenden Motorteils eindringen. Die Kühlmittelkanäle 21 werden durch Nuten in den Bohrungen der Spannhülsen 13,14 gebildet. Das Kühlmittel gelangt schließlich über einen weiteren als Ringspalt 26 ausgebildeten Kühlmittelkanal 23 zu einer Auslaßöffnung 24 im Spindelkasten 1, die durch eine Entlüftungsschraube 25 abgedeckt ist. Durch die Innenkühlung werden erwärmte Motorenteile durch eine Luftschicht von den hochgenauen Spindelkastenteilen und der Werkstückspindel 2 thermisch isoliert. Dafür sorgen die beiden Ringspalte 22,26 und die Kühlmittelkanäle 21, die gleichzeitig die Wärmeübertragung zwischen Rotor 8 und Werkstückspindel 2 durch die zur Drehmomentenübertragung unvermeidlichen Stege 30 vermindern.

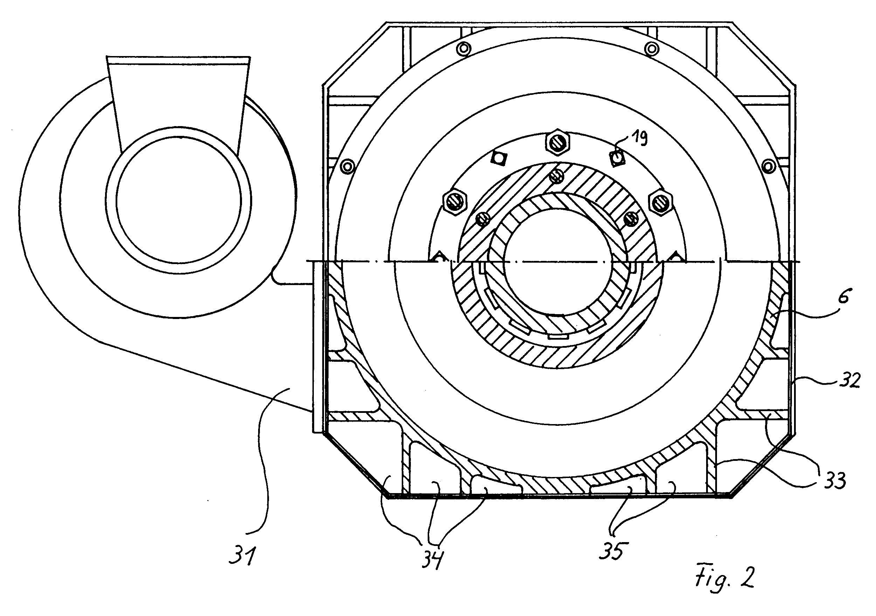

Der äußere Kühlmittelstrom, der durch den in Fig. 2 dargestellten Fremdlüfter 31 erzeugt wird, trägt durch die Doppelwandung von Motorgehäuse 6 und Motorflansch 10, zwischen denen er eingeleitet wird, ebenfalls zur Isolierung des Spindelkastens 1 vom Antriebsmotor 3 bei. Der Kühlmittelstrom wird zwischen Motorgehäuse 6 und der Motorabdeckung 32 durch die zwischen den Kühlrippen 33 des Antriebsmotors 3 sich ergebenden Lüftungsquerschnitte 34 der Kühlmittelkanäle 35 zum Werkstückspindelende hin geleitet. Hier kann er durch Auslaßspalte 27 in die Umgebung entweichen.

Es ist selbstverständlich möglich, beide Kühlmittelströme durch einen gemeinsamen Fremdlüfter zu erzeugen, wenn für beide Kühlmittelströme aufbereitete Luft verwendet wird. Es kann auch ein einziger Kühlmittelstrom verwendet werden, der sich auf die beiden Kühlmittelpfade aufteilen würde. Soll dafür keine aufbereitete Luft verwendet werden, müßte der Motorinnenraum gegen das Eindringen des Kühlmittels abgedichtet sein. Die Erfindung umfaßt derartige konstruktive Alternativen.

## Patentansprüche

1. Antrieb für die Werkstückspindel einer Werkzeugmaschine mit auf dem freien Ende der Werkstückspindel angeordnetem Antriebsmotor, wobei der Rotor des Antriebsmotors auf der Werkstückspindel befestigt und der Stator in einem Motorgehäuse angeordnet ist, das mit dem Spindelkasten der Werkstückspindel verbunden ist, dadurch gekennzeichnet, daß Kühlmittelkanäle 21,23,35 zwischen Motorgehäuse 6 und einer Motorabdeckung 32, zwischen Rotor 8 und Werkstückspindel 2 und zwischen Spindelkasten 1 und Rotor 8 verlaufen.

2. Antrieb für die Werkstückspindel einer Werkzeugmaschine nach Anspruch 1 dadurch gekennzeichnet, daß die Kühlmittelkanäle 21 zwischen Rotor 8 und Werkstückspindel 2 in den Spannhülsen 13,14 des Rotors 8 angeordnet sind.

3. Antrieb für die Werkstückspindel einer Werkzeugmaschine nach Anspruch 1 dadurch gekennzeichnet, daß die Kühlmittelkanäle 21 zwischen Rotor 8 und Werkstückspindel 2 durch Längsnuten am Außenumfang der Werkstückspindel 2 gebildet werden.

4. Antrieb für die Werkstückspindel einer Werkzeugmaschine nach Anspruch 1 dadurch gekennzeichnet, daß die Kühlmittelkanäle 35 über einen Ringkanal 12 zwischen dem mit dem Spindelkasten 1 verschraubten Motorflansch 10 und dem Motorgehäuse 6 mit Kühlmittel versorgt werden.

5. Antrieb für die Werkstückspindel einer Werkzeugmaschine nach Anspruch 1 dadurch gekennzeichnet, daß zwei getrennte Kühlmittelströme vorgesehen sind.

6. Antrieb für die Werkstückspindel einer Werkzeugmaschine nach Anspruch 5 dadurch gekennzeichnet, daß der erste Kühlmittelstrom am spindelkastenseitigen Ende des Antriebsmotors 3 beginnt und zwischen Motorgehäuse 6 und Motorabdeckung 32 zur vom Spindelkasten 1 abgewandten Seite des Antriebsmotors 3 führt und daß der zweite Kühlmittelstrom im Deckel 15 auf der vom Spindelkasten 1 abgewandten Seite des Antriebsmotors 3 beginnt und zwischen Rotor 8 und Werkstückspindel 2 zur im Spindelkasten 1 vorgesehenen Entlüftungsschraube 25 führt.

7. Antrieb für die Werkstückspindel einer Werkzeugmaschine nach Anspruch 1 dadurch gekennzeichnet, daß als Kühlmittel Luft verwendet wird, die durch einen Lüfter 31 in die Kühlmittelkanäle 21,35 gefördert wird.

## Claims

1. A drive for the workpiece spindle of a machine tool comprising a drive motor arranged on the free end of the workpiece spindle, wherein the rotor of the drive motor is fixed on the workpiece spindle and the stator is arranged in a motor housing which is connected to the headstock of the workpiece spindle, characterised in that coolant ducts (21, 23, 35) extend between the motor housing (6) and a motor cover (32), between the rotor (8) and the workpiece spindle (2) and between the headstock (1) and the rotor (8).

2. A drive for the workpiece spindle of a machine tool according to claim 1 characterised in that the coolant ducts (21) between the rotor (8)and the workpiece spindle (2) are arranged in the clamping sleeves (13, 14) of the rotor (8).

3. A drive for the workpiece spindle of a machine tool according to claim 1 characterised in that the coolant ducts (21) between the rotor (8) and the workpiece spindle (2) are formed by longitudinal grooves at the outside periphery of the workpiece spindle (2).

4. A drive for the workpiece spindle of a machine tool according to claim 1 characterised in that the coolant ducts (35) are supplied with coolant by way of an annular duct (12) between the motor housing (6) and the motor flange (10) which is screwed to the headstock (1).

5. A drive for the workpiece spindle of a machine tool according to claim 1 characterised in that two separate coolant flows are provided.

6. A drive for the workpiece spindle of a machine tool according to claim 5 characterised in that the first coolant flow begins at the end of the drive motor which is towards the headstock and leads between the motor housing (6) and the motor cover (32) to the side of the drive motor (3) which is remote from the headstock (1) and that the second coolant flow begins in the cover (15) on the side of the drive motor (3) which is remote from the headstock (1) and leads between the rotor (8) and the workpiece spindle (2) to the vent screw (25) provided in the headstock (1).

7. A drive for the workspindle spindle of a machine tool according to claim 1 characterised in that the coolant used is air which is conveyed by a fan (31) into the coolant ducts (21, 35).

## Revendications

1. Entraînement de la broche à pièce à usiner d'une machine-outil, comportant un moteur d'entraînement, disposé à l'extrémité libre de la broche à pièce à usiner, le rotor du moteur d'entraînement étant fixé sur la broche à pièce à usiner et le stator étant disposé dans un carter du moteur relié au boîtier de broche de la broche à pièce à usiner, caractérisé en ce que des canaux de fluide de refroidissement 21,23,35 s'étendent, entre le carter du moteur 6 et un recouvrement du moteur 32, entre le rotor 8 et la broche de pièce à usiner 2 et entre le boîtier de broche 1 et le rotor 8.

2. Entraînement de la broche à pièce à usiner d'une machine-outil, selon la revendication 1, caractérisé en ce que les canaux de fluide de refroidissement 21 sont disposés entre le rotor 8 et la broche à pièce à usiner 2, dans les douilles de serrage 13,14 du rotor 8.

3. Entraînement de la broche à pièce à usiner d'une machine-outil, selon la revendication 1, caractérisé en ce que les canaux à fluide de refroidissement 21 situés entre le rotor 8 et la broche à pièce à usiner 2 sont formés par des rainures longitudinales situées sur la périphérie extérieure de la broche à pièce à usiner 2.

4. Entraînement de la broche à pièce à usiner d'une machine-outil, selon la revendication 1, caractérisé en ce que les canaux à fluide de refroidissement 35 sont alimentés en fluide de refroidissement par un canal annulaire 12 situé entre la bride de moteur 10, vissée au boîtier de broche 1 et le carter du moteur 6.

5. Entraînement de la broche à pièce à usiner d'une machine-outil, selon la revendication 1, caractérisé en ce que sont prévus deux courants séparés de fluide de refroidissement.

6. Entraînement de la broche à pièce à usiner d'une machine-outil, selon la revendication 5, caractérisé en ce que le premier courant de fluide de refroidissement commence à l'extrémité, côté boîtier de broche, du moteur d'entraînement 3 et passe entre le carter du moteur 6 et le recouvrement du moteur 32, pour aller du côté du moteur d'entraînement 3 qui est opposé au boîtier de broche 1 et en ce que le deuxième courant de fluide de refroidissement commence dans le couvercle 15, du côté, opposé au boîtier de broche 1, du moteur d'entraînement 3 et passe entre le rotor 8 et la broche à pièce à usiner 2, vers une vis d'aération 25 prévue dans le boîtier de broche 1.

7. Entraînement de la broche à pièce à usiner d'une machine-outil, selon la revendication 1, caractérisé en ce que de l'air, véhiculé dans les conduits de fluide de refroidissement 21,35, au moyen d'un ventilateur 31, est utilisé comme fluide de refroidissement.
